# EUROPEAN PATENT SPECIFICATION

(11) **EP 1 866 775 B1**
(45) Date of publication and mention of the grant of the patent: **20.04.2016**
(21) Application number: 06705000.5
(22) Date of filing: 10.03.2006
(51) Int. Cl.: G06F 12/12, G06F 17/30

(54) **METHOD FOR INDEXING IN A REDUCED-REDUNDANCY STORAGE SYSTEM**
VERFAHREN ZUM INDIZIEREN IN EINEM SPEICHERSYSTEM MIT REDUZIERTER REDUNDANZ
PROCEDE D'INDEXAGE DANS UN SYSTEME DE STOCKAGE A REDONDANCE REDUITE

(30) Priority: 11.03.2005 AU 2005901174; 11.03.2005 US 660961 P
(43) Date of publication of application: 19.12.2007
(73) Proprietor: Rocksoft Limited, Dulwich, SA 5065 (AU)
(72) Inventor: WILLIAMS, Ross Neil, Adelaide, S.A. 5000 (AU)
(74) Representative: Chamberlain, Alan James
(86) International application number: PCT/AU2006/000327
(87) International publication number: WO 2006/094366

(56) References cited:
- US-A- 5 990 810
- US-A1- 2003 018 878
- US-B1- 6 292 795
- US-B1- 6 594 665
- US-B2- 6 704 730
- US-B2- 6 754 799
- RAMABHADAN S ET AL: "Prefix Hash Tree: an indexing data structure over Distributed Hash Tables" INTERNET CITATION 2004, XP002467877 Retrieved from the Internet: URL:http://berkeley.intel-research.net/syl via/pht.pdf [retrieved on 2008-02-05]
- ALGORITHMICA SPRINGER-VERLAG USA, vol. 33, no. 1, pages 19-33, XP7914674 ISSN: 0178-4617 DOI: DOI:10.1007/S00453-001-0102-Y Retrieved from the Internet: URL:http://w3.nada.kth.se/~snilsson/public ations/Functional-trie-compression-experim ent/text.pdf>
- NIKOLAS ASKITIS ET AL: "B-tries for disk-based string management", 11 March 2008 (2008-03-11), THE VLDB JOURNAL ; THE INTERNATIONAL JOURNAL ON VERY LARGE DATA BASES, SPRINGER, BERLIN, DE, PAGE(S) 157 - 179, XP019723893, ISSN: 0949-877X
- STEFFEN HEINZ ET AL: 'Burst tries: a fast, efficient data structure for string keys' ACM TRANSACTIONS ON INFORMATION SYSTEMS vol. 20, no. 2, 01 April 2002, pages 192 - 223, XP055020035 DOI: 10.1145/506309.506312 ISSN: 1046-8188
- LITWIN W: "Trie Hashing", ACM-SIGMOD 1981 : INTERNATIONAL CONFERENCE ON MANAGEMENT OF DATA, ACM, US, 29 April 1981 (1981-04-29), pages 19-29, XP007920298, ISBN: 978-0-89791-040-8
- CHANDRA AK ET AL: "Digital B-Trees", 1 June 1982 (1982-06-01), IP.COM JOURNAL, IP.COM INC., WEST HENRIETTA, NY, US, XP013039097, ISSN: 1533-0001
- Donald Knuth: "The Art of Computer programming: sorting and searching, 3rd edition", 1998, Addison-Wesley, Boston, US ISBN: 0-201-89685-0 vol. 3, pages 492-501,

## Description

### 1 Field

This invention provides a method and apparatus for indexing subblocks of data in a reduced-redundancy computer storage system.

### 2 Background

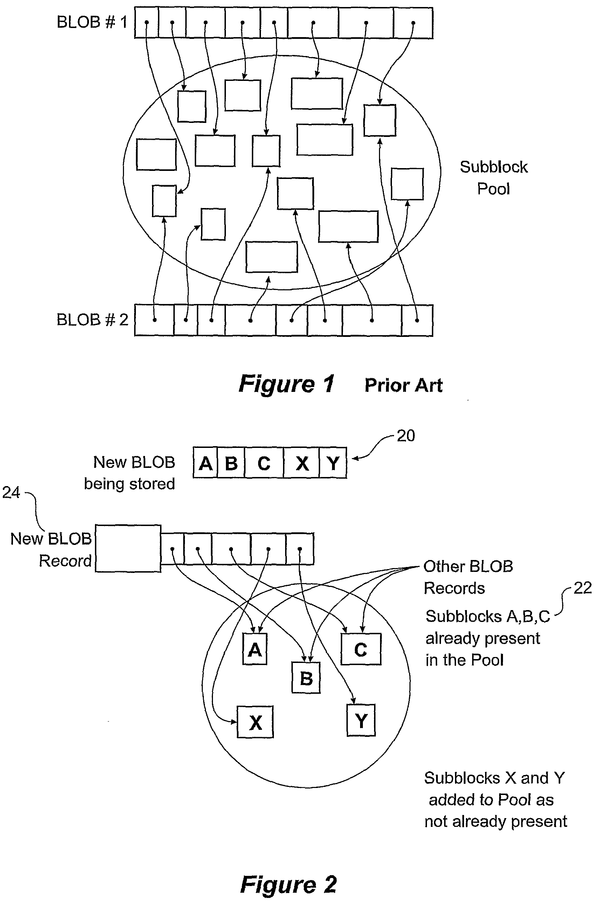

In a reduced-redundancy computer storage system, each BLOB (Binary Large OBject - a finite sequence of zero or more bytes (or bits)) is represented as a sequence of subblocks from a pool of subblocks. **Figure 1** (prior art) shows a pool of subblocks and two BLOBs that are represented as lists of subblocks from the pool.

Each BLOB of data to be stored is divided into subblocks and matched against the subblocks in the pool. Each subblock in the new BLOB that is already present in the pool is replaced by a reference to the subblock in the pool. Each subblock in the new BLOB that is not in the pool is added to the pool. By storing only new unique subblocks, the storage system forms a reduced-redundancy representation of the BLOBs stored, and thereby reduces the amount of storage space used. **Figure 2** depicts the addition of a new BLOB 20 consisting of the subblocks ABCXY into a pool that already contains subblocks A, B and C 22. The new BLOB 24 is represented as a list of subblocks consisting first of the existing subblocks A, B and C and then of two new subblocks X and Y that are added to the subblock pool as a result of adding the new BLOB.

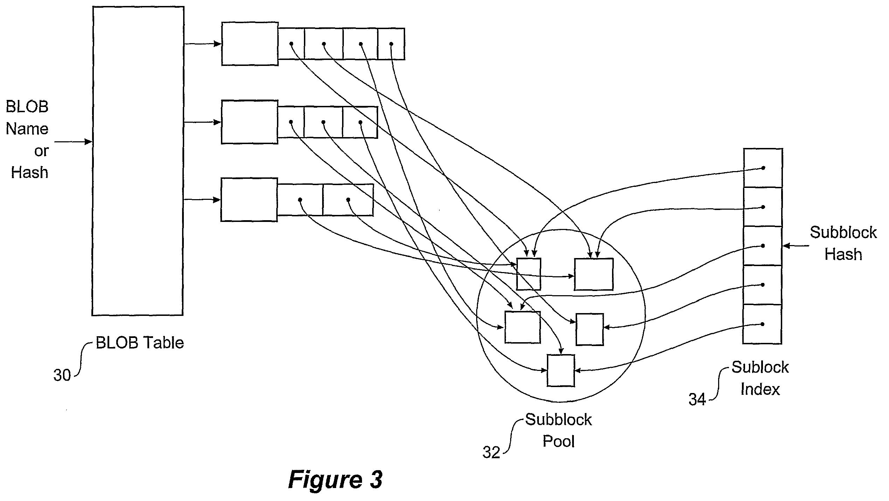

To implement this method, a reduced-redundancy storage system typically consists of the following components: a BLOB table 30 (to represent the BLOBs and allow them to be retrieved), a subblock pool 32 (to hold the actual subblock content), and a subblock index 34 (to quickly identify whether a subblock is present in the store and locate it if it is) (Figure 3). Each of these components can be implemented in a wide variety of ways.

Of critical importance to the speed of a reduced-redundancy storage system is the subblock index. Whereas the BLOB table is typically accessed just once or twice for each BLOB stored, and the subblock pool can operate on subblocks in groups for greater efficiency, the subblock index is accessed (at least in a simplistic implementation) for every subblock that is presented to the system for storage. If the subblocks are a kilobyte each, this is about twenty thousand index lookups just to store twenty megabytes of data. It is therefore vital that the subblock index is fast.

The actual speed of access to the index depends on whether the index is held in memory or on disk, as a random memory access takes of the order of fifty nanoseconds whereas a random disk access takes of the order of ten milliseconds (about 200,000 times longer). The index could be held completely on disk, partially on disk, or entirely in memory. While it is clearly desirable for the index to reside entirely in memory, this may be impractical or too expensive if the index is large. If some part of the index is to be held on disk, then it is important to design the index so as to minimize disk accesses, and in particular random access disk accesses.

Another requirement of an index data structure is that it be capable of scaling, and of scaling smoothly, as storage systems often grow to sizes that are larger than expected.

The present invention provides a data structure that can grow smoothly while providing high speed access with a low number of random access disk operations.

US 5,990,810 discloses a method and apparatus for detecting common spans within one or more data blocks by partitioning the blocks into subblocks and searching the group of subblocks (or their corresponding hashes) for duplicates. Blocks can be partitioned into subblocks with subblock boundaries at fixed positions, data-dependent positions, or with multiple overlapping subblocks. By comparing the hashes of subblocks, common spans of one or more blocks can be identified without ever having to compare the blocks or subblocks themselves. This leads to an incremental backup system that backs up changes rather than changed files, a utility that determines the similarities and differences between two files, a file system that stores each unique subblock at most once, and a communications system that eliminates the need to transmit subblocks already possessed by the receiver.

RAMABHAOAN S ET AL: "Prefix Hash Tree: an indexing data structure over Distributed Hash Tables" INTERNET CITATION XP002467877 Retrieved from the Internet: URL:http://berkeley.intelresearch.net/sylvia/pht.pdf discloses a prefix hash tree having a trie-based structure that is efficient in that updates are doubly logarithmic in the size of the domain being indexed and resilient in that a failure at any given node does not affect the availability of data stored at other nodes.

### 3 Summary

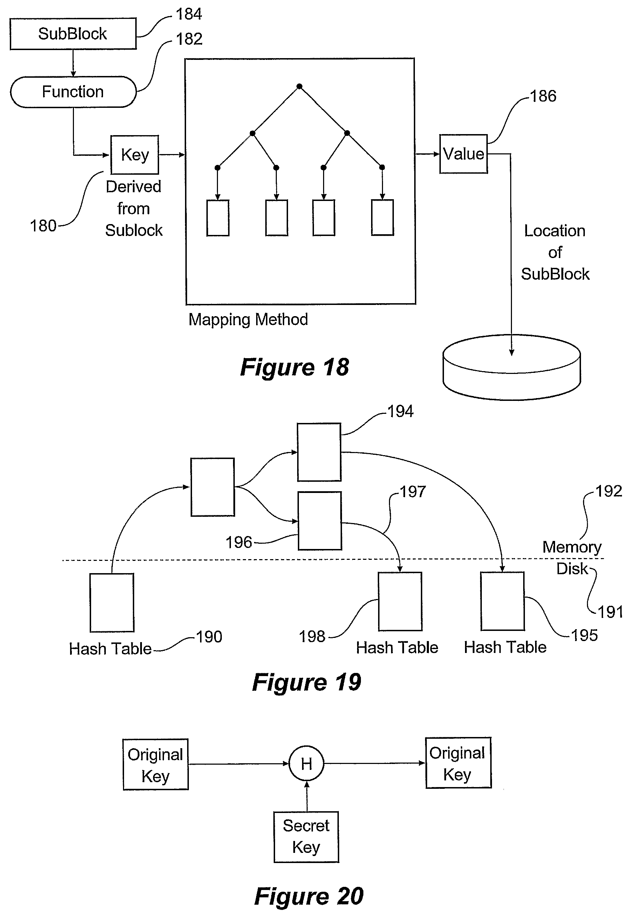

The invention is defined in the attached independent claims, to which reference should now be made. Further, preferred features may be found in the sub claims appended thereto. This specification discloses a data structure for implementing an index of blocks of data, where a block includes BLOBs and subblocks. For the purpose of exposition, this specification describes, without limitation, indexes of subblocks.
A subblock index maps keys derived from subblocks to subblock storage locations. Figure 18 shows this, with a depiction of a mapping method. Keys 180 are typically fixed-length hashes (e.g. 128-bit MD5 hashes 182) of subblocks 184. Subblock storage locations may take many forms, but all assist in locating the subblock. For the purposes of exposition, the hashes will be referred to as keys and the subblock locations will be referred to as values 186.
In some aspects of the invention where the sole purpose of the data structure is to record the presence or absence of keys, there will be no values. Another way or expressing this is that the values are all zero bytes long. An example, without limitation, is when one computer is keeping track of the subblocks held in another computer.
In an aspect of the invention, the key/ value mapping is implemented using a data structure comprising of a binary digital search tree (over successive bits of the key) whose leaves each contain a hash table that maps keys falling into the leaf to their corresponding values (Figure 4). The non-leaf nodes 50 do not contain entries. As entries are added to the data structure, each leaf node 52, 54 whose hash table becomes full 54 (to a particular fullness level) is replaced by a non-leaf node 56 with two leaf node descendents 58, 59 (Figure 5). During this splitting process, the contents of the hash table are split between the two new leaf nodes, with each entry being allocated to one of the two new leaves in accordance with the next unused (by the tree) bit of its key (**Figure 6**). The keys of each leaf's hash table entries should be based only on those bits of the original key not already constrained by the position of the leaf in the tree (**Figure 7**).

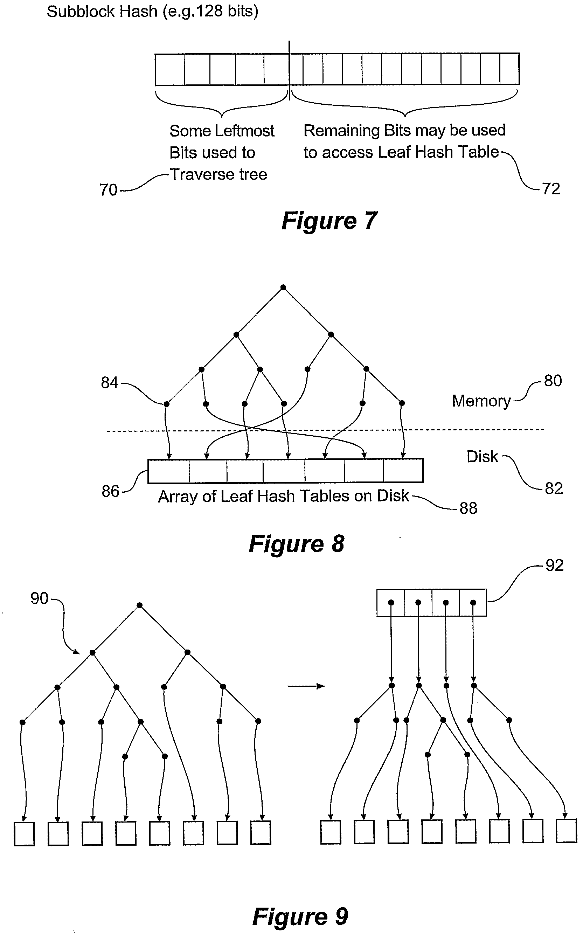

If the hash tables in the leaf nodes are configured to be quite large (e.g. thousands of entries), then an interesting property of the data structure is that the non-leaf nodes in the tree occupy very little space in comparison to the leaf nodes. Therefore, in a further aspect of the invention, the non-leaf nodes are held in memory and the leaf nodes (or at least the hash tables they contain) are held on disk (**Figure 8**). This organisation has several advantages. First, this organisation uses very little memory. Second, as the width of the hash (e.g. 128 bits) provides an upper bound on the depth of the tree, tree traversals are very fast, comprising, in the worst case of a tight loop of about 128 (for a 128-bit key) random access memory seeks (the totality of which is still about 1500 times faster than a random disk seek). Third, so long as the hash tables in the leaves are not allowed to become too full, the leaf hash table lookup that will occur at the end of the binary tree root-to-leaf traversal will consist of a single random access disk seek. This is time consuming, but far less time consuming than the several random-access disk seeks that would be required if the non-leaves of the tree were held on disk too.

In some embodiments, the keys are subblock hashes. As these are (at least in theory) uniformly randomly distributed, it is likely that the tree will be fairly well balanced at each stage of its growth. This provides the opportunity to reduce even the small tree-traversal access time. In a further aspect of the invention, the top L levels of the tree are replaced by a single array of 2^{L} entries (**Figure 9**). This reduces the L steps of traversing the top L levels of the tree to a single step of looking up the array. As growth of the tree is likely to be balanced, it is likely that there will only be a few levels of tree beneath the array (**Figure 9**). The choice of how many levels (L) of tree to replace by an array could be determined by a variety of factors, the most likely one being the level of fullness of the tree at each level.

While the uniform tree growth that results from the uniformity of hash values allows the top of the tree to be replaced by an array, the same uniformity causes discontinuities in the growth of the leaves of the tree. Experiments have shown that the tree can grow so evenly that the entire bottom layer of leaf nodes fill up and split at roughly the same time. While this does not threaten correctness, it does have real-time implications because splitting a leaf node requires splitting the entries in the node's hash table between the hash tables of its descendents and this takes much longer than merely adding a new entry to a table. If all the leaves at one level in a tree split at roughly the same time, the speed of the system will drop until the splittings are complete and then will resume its normal level. There are several ways to avoid this dip in performance. In a further aspect of the invention, a random fullness threshold is assigned to each leaf when the leaf is created. The leaf is split only when its hash table's fullness reaches the threshold. For example, one leaf might be allocated a 40% threshold and another 80% threshold. The random values can be chosen according to some distribution that does not choose values below a minimum (so as not to waste space) or above a maximum (so as to avoid long overrun chains within the table). Random thresholds spread out the times when the leaves at a given level split. Another approach is to create hash tables of random size in each leaf node when the node is created. The differently-sized hash tables will then fill at different times.

In summary, a method is provided for indexing subblocks that uses up very little memory, requires a single random disk access to lookup a key, is scalable, and grows smoothly with little or no significant real-time impact along the way.

### 4 Terminology

**Binary Digital Search Tree:** A binary tree where the decision made at each level is determined by successive bits of the key.
**BLOB (Binary Large OBject):** This is a finite sequence of zero or more bytes (or bits) of data. Despite its name, a BLOB is not necessarily large; a BLOB could be as small as a few bits or as large as gigabytes.
**Block:** A finite sequence of zero or more bytes (or bits) of data. This term is abstract and includes without limitation BLOBs and subblocks.
**Bucket:** See *Index Bucket.*
**Collision:** A collision occurs in a hash table when two or more keys hash to the same slot (position) in the table.
**Collision Chain:** When an entry is to be added to a hash table and the entry collides with another entry, it can be stored by forming a collision chain of entries from the original entry. The collision chain can exist within the table or external to it.
**Digital Search Tree:** A tree where the decision made at each level is determined by successive digits of the key.
Disk: A random access storage medium used by computers. Typically, the term refers to spinning platters of metal holding magnetised data (hard disks). In the context of this document, the term may more broadly be taken to mean a random access storage medium that is significantly slower than *Memory.*
**Entry:** See *Index Entry.*
**Hash:** A fixed-length sequence of bytes (or bits) generated by a hash algorithm. Hashes of subblocks may be used as representatives of the subblocks to index and compare subblocks.
**Hash of Subblock:** See *Subblock Hash.*
**Hash Table:** A means of mapping keys to values using an array, where values (and sometimes also keys or part of keys) are stored in the array at positions determined by hashing the key.
**Index Bucket:** In embodiments that implement the subblock index using a hash table, the hash table may be organised as an array of buckets each of which contains a fixed number of entry slots each of which may either be empty or contain an entry. One purpose of index buckets is to organise a hash table into pieces that can be read from disk and written to disk as a group so as to reduce the number of random access disk operations.
**Index Entry:** A record in the subblock index. In some embodiments an index record contains an index key and an index value. In some embodiments an index record contains part of an index key and an index value. In some embodiments an index record contains just an index value. In some embodiments an index record contains no value and some or all of a key.
**Index Key:** The information about a subblock provided to the subblock index in order to retrieve information about the subblock. In some embodiments, the information is retrieved by locating and reading an index entry.
**Index Value:** The information yielded about a subblock by the index when the subblock (or a derivative of the subblock, an example of which is its hash) is looked up in the index. In some embodiments, the value consists of the location of the subblock on disk. In other embodiments there may be no value if the sole purpose of the index is to record the presence or absence of a key.
**Keys:** See *Index Key.*
**Leaf:** The leaf of a search tree is a node that does not have any descendents.
**Memory:** A random access storage medium used by computers, typically referring to Random Access Memory (RAM). In the context of this document, the term may more broadly be taken to mean a random access storage medium that is significantly faster than *Disk.*
**Partitioning Method:** A method for dividing a BLOB into one or more subblocks such that every byte (or bit) in the BLOB falls within exactly one subblock.
**Reduced-Redundancy Store:** A storage system that eliminates, in its representation of data, some of the duplicated data within the set of data that it stores.
**Slot:** A position in a hash table. A slot may be empty or it may contain an entry.
**Store:** See *Reduced-Redundancy Store.*
**Subblock:** A sequence of bytes (or bits) that has been identified as a unit for the purpose of indexing, comparison and/ or redundancy elimination. A BLOB may be partitioned into subblocks.
**Subblock Hash:** The result of applying a hash algorithm to a subblock. Hashes of subblocks may be used, for example, as representatives of the subblocks to index and/ or compare the subblocks.
**Subblock Index:** A data structure that maps (or otherwise associates) a subblock's hash (or the subblock itself) to the location of the subblock (e.g., without limitation, a cluster number (and possibly also a subblock identifier)).
**Subblock Pool:** A collection of subblocks in a reduced-redundancy storage system.
**Traversal:** See *Tree Traversal.*
**Traverse:** See *Tree Traversal.*
**Tree Traversal:** "Traversing a tree" usually means visiting every node of the tree, but in the context of this document, it means following the path from the root of the tree to a leaf.
**Values of the Index:** See *Index Value.*

Throughout this specification and the claims that follow, unless the context requires otherwise, the words 'comprise' and 'include' and variations such as 'comprising' and 'including' will be understood to be terms of inclusion and not exclusion. For example, when such terms are used to refer to a stated integer or group of integers, such terms do not imply the exclusion of any other integer or group of integers.

The claims that follow in Section 7 of this specification are broad statements of the invention/s disclosed herein and are incorporated into the body of the specification by reference.

The reference to any prior art in this specification is not, and should not be taken as, an acknowledgement or any form of suggestion that such prior art forms part of the common general knowledge.

### 5 Brief Description of Figures

**Figure 1** depicts the representation of two BLOBs of data as sequences of subblocks, some of which appear in both BLOBs.
**Figure 2** shows how only new unique subblocks (X and Y) of a new BLOB consisting of subblocks ABCXY need be added to the subblock pool (subblocks A, B and C already being present).
**Figure 3** depicts a reduced-redundancy storage system comprising of a BLOB table, a subblock pool, and a subblock index.

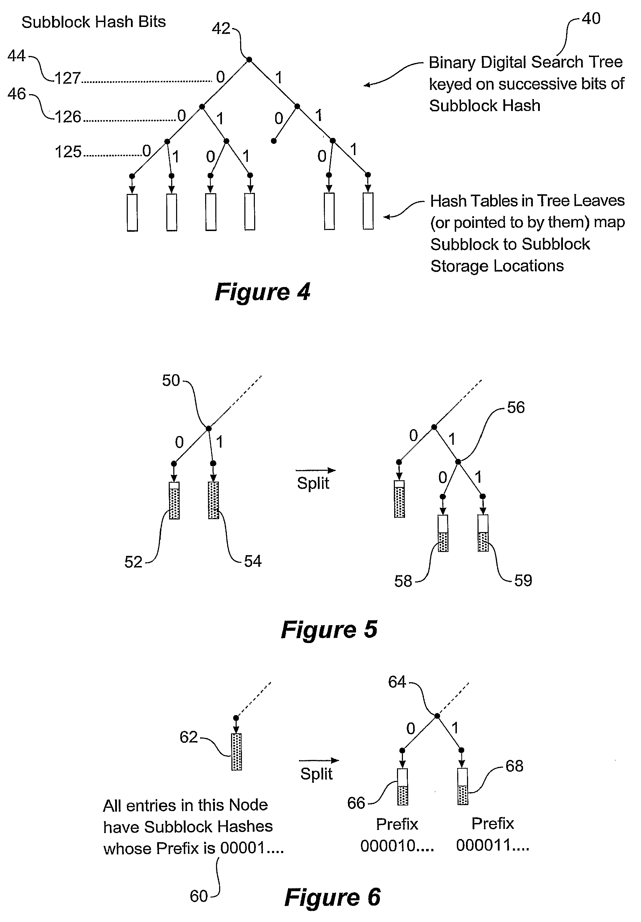

**Figure 4** depicts a data structure used for mapping subblock hashes to subblock storage locations, being a binary digital search tree (over successive bits of the subblock hash) whose leaves are hash tables that contain key/value pair entries.
**Figure 5** shows how a leaf node on the tree splits when its hash table becomes sufficiently full.
**Figure 6** depicts the splitting of a leaf node of the binary search tree, causing the leaf node to convert into a non-leaf node and its entries within the hash table to be split between two new descendent leaf nodes. Because the new leaf nodes are one level deeper in the tree, accessing entries in these leaf nodes involves using an additional bit of the subblock hash.
**Figure 7** depicts a subblock hash and shows how a left part of it may be used to traverse the binary digital search tree, with the remainder being available to access the hash table in the leaf.
**Figure 8** shows how the binary digital search tree may be held in memory and the hash tables in the leaves on disk, here in a file containing an array of hash tables.
**Figure 9** shows how the top of the binary digital search tree can be replaced by an array.

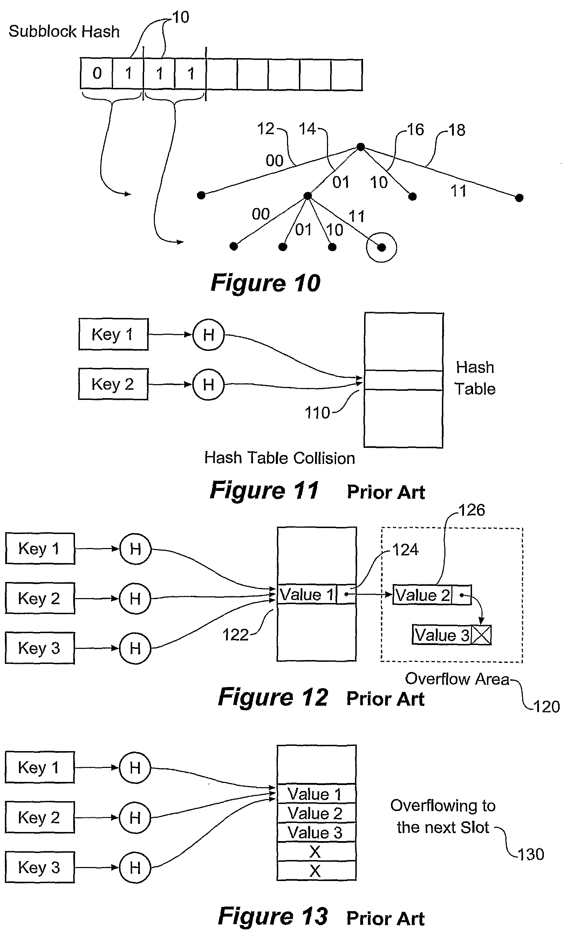

**Figure 10** depicts a quaternary digital search tree in which successive pairs of bits determine the choice made at each level.
**Figure 11** (prior art) depicts a hash table collision in which two keys hash to the same position in the table.
**Figure 12** (prior art) depicts a hash table with an external overflow area.
**Figure 13** (prior art) depicts in-table overflow where overflowing entries are **stored in** the next empty slot (linear probing).

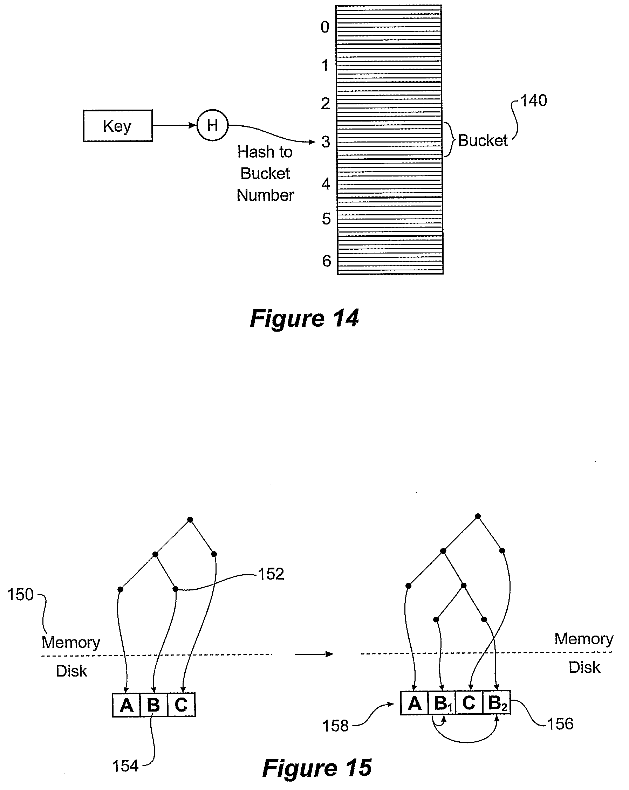

**Figure 14** depicts a hash table organised as an array of buckets, each of which contains a fixed number of entry slots.
**Figure 15** depicts how, when a leaf node splits, its existing hash table can be used as the hash table of the left leaf.

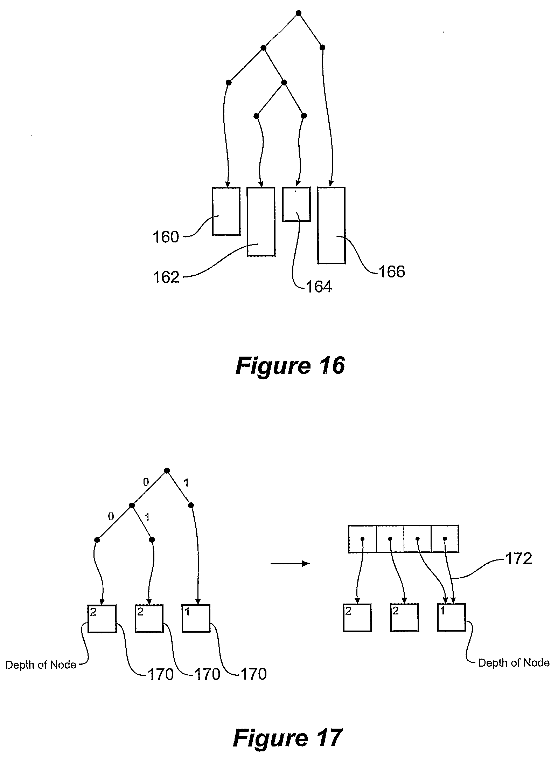

**Figure 16** depicts a binary digital search tree with leaves containing hash tables of varying sizes.
**Figure 17** depicts how level numbers make it possible to replace the first L levels of a binary digital search tree by an array, even if level L is not yet full. In this figure the first two levels are replaced.
**Figure 18** depicts a mapping method where the keys are derived from the subblock and the values are the locations of the subblocks.
**Figure 19** depicts the splitting of a hash table by loading it from disk to memory, splitting it in memory, then writing the two hash tables to disk.
**Figure 20** depicts the hashing of a key with a secret key to prevent a complexity attack on the data structure.

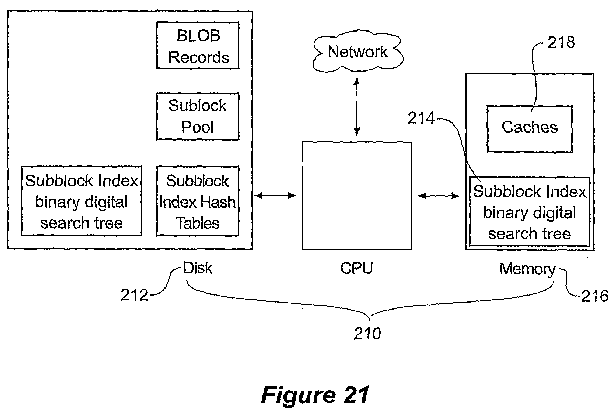

**Figure 21** shows how an embodiment might be deployed on typical computer hardware. All the data structures reside on disk. The binary digital search tree is held in memory along with some caches that store working copies of some BLOB records and parts of the subblock pool.

Specific embodiments of the invention will now be described in some further detail with reference to and as illustrated in the accompanying figures. These embodiments are illustrative, and are not meant to be restrictive of the scope of the invention. Suggestions and descriptions of other embodiments may be included within the scope of the invention but they may not be illustrated in the accompanying figures or alternatively features of the invention may be shown in the figures but not described in the specification.

The reference to any prior art in this specification is not, and should not be taken as, an acknowledgement or any form of suggestion that such prior art forms part of the common general knowledge.

### 6 Detailed Description

Figure 21 shows how an embodiment might be deployed on typical computer hardware 210. All the data structures reside on disk 212. The binary digital search tree 214 is held in memory 216 along with some caches 218 that store working copies of some BLOB records and parts of the subblock pool.

### 6.1 Index Keys

The subblock index data structure is used to determine the existence and location of a subblock. This suggests that the data structure's keys be derived from the subblock.

The subblocks themselves could be used as keys. However, this could result in a very deep tree. For example, if all of the subblocks started with one thousand bytes that are zero, every access of the tree would have to process those thousand bytes of data before making any real progress (i.e. progress that distinguishes one subblock from another) down the tree.

Hashes of subblocks make better keys than the subblocks themselves because hashes are of finite width (e.g. 128 bits (16 bytes)) and because hashes distil (in a lossy manner) all of the bytes in each subblock. Finite width makes the keys easier to manipulate and ensures that the tree cannot grow deeper than the hash width. Hashing all of the bytes of the subblock into a hash key eliminates the inefficiencies that would arise where the subblocks have long common prefixes. An advantage of using subblock hashes as keys is that it is very likely that the resultant keys will be randomly and uniformly distributed within the space of possible keys.

### 6.2 Index Values

Each value of an index consists of a record containing one or more subblock attributes.

In a reduced-redundancy storage system, the value could be the location of a subblock being indexed. Examples of storage location values are, without limitation: a position on a disk, a filename, a file number, a subblock cluster number, a mask identifying a small number of subblock clusters, and the combination of a cluster number and a subblock identifier within the cluster.

In communications applications, the value could carry the location of a subblock within a network, or even no information at all, with the application relying simply on the existence of a subblock's key in the index to record the existence of a subblock on a remote computer.

The nature of the values depends largely on the nature of the indexing application..

### 6.3 The Tree

An aspect of the invention consists of a tree of hash tables. There are a wide variety of trees and a wide variety of hash tables that could be used in each of these roles.

If the keys are subblock hashes, a digital search tree is particularly effective because it is very simple to traverse. In a digital search tree, the key is divided into fixed-width *digits* and each successive digit is used to choose a branch at each level of the tree. For example, in a typical embodiment, a binary digital search tree 40 could be used, with the hash divided up into one-bit digits. Starting at the root 42 of the binary digital search tree, the leftmost (most significant) bit 44 of the hash could be used to decide whether to go left or right. Once at a direct child of the root 46, the next bit would be used to make the next decision, and so on (**Figure 4**).

If the hash were divided into groups of two bits 10, each such group could be treated as a digit and the digital search tree would be a quaternary digital search tree with four branches 12,14,16,18 emanating from each non-leaf node (**Figure 10**). Similarly, digits of three bits each would result in a tree with a furcation of eight. Any other furcation could be used too.

It is easy to show that, for any non-small hash table size, the non-leaf nodes in the tree use little memory. Consider the case of a binary digital search tree and K-bit hashes. If each non-leaf node of the tree consists of eight bytes (two four-byte pointers), then (taking into account the sharing of ancestor nodes with other leaf nodes), the total memory cost of each leaf will be 8 x (1/2 + 1/4 + 1/8 + ... + 1/(2^{L})) where L is the depth of the leaf. Even for infinite L, this is still only 8 bytes. If the hash table in each leaf is over a megabyte, then the non-leaf nodes constitute less than one hundred thousandth of the total space consumed by the entire data structure. This high ratio makes it economic to store the tree in memory.

Note that all the key/value pair entries stored in a particular leaf have keys with a common prefix 60, 70. There is therefore no point in using any part of this common prefix to access the hash table in the leaf (**Figure 6****,** **Figure 7**).

There are several challenges associated with the use of hash tables: how to address the table, how to deal with collisions, where to store the table, and how to split the table.

### 6.4 Hash Table Addressing

Consider the point during a search for a subblock where the subblock has been hashed and the first T bits of the hash have been used to traverse the tree, resulting in the arrival at a leaf. Inside the leaf is a hash table. What happens next?

First, as the first T bits have been used to arrive at the leaf, it is certain that *all* the keys that are stored, or will be stored, in the leaf's hash table have the same T bit prefix (**Figure 6** and **Figure 7**). It is therefore important not to use those T bits to select a position within the hash table.

If the hash table contains N=2^{P} slots, where P is a positive integer, it is easy to hash the key into the hash table. Simply use the P bits 72 of the key that follow the T bits 70 already used to get to the leaf. If N is not a power of two, a different approach can be used. Take the next Q bits following the first T bits and divide them by N. The remainder is the hash table index. This should yield a fairly even spread in the table, so long as Q is a few bits higher than log₂(N) (so as not to significantly load one part of the table more than another). A variety of other hashing methods could be used.

### 6.5 Hash Table Collisions

A collision occurs in a hash table when two or more keys hash to the same position (*slot*) 110 (Figure 11) (prior art). One way to address this situation is simply to throw away the second entry. This can be an appropriate choice in some contexts. However, if the hash table is not allowed to be lossy, this option cannot be used, and one of a wide variety of techniques can be employed to deal with this "overflow" situation.

One classic technique for dealing with a collision is to have a separate storage area called an overflow area 120. Each hash table slot 122 contains an overflow field 124. If a collision occurs in the slot, the overflowing entry is stored in the overflow area and a pointer to the entry is placed in the slot 126 (**Figure 12**) (prior art). The overflow area allows entries to point to each other too, allowing each overflowing slot to point to a list of entries (**Figure 12**) (prior art). This technique works well if a separate overflow area is available (as it might be in the form of a memory heap if the hash table were in memory). However, if the hash table is on disk, placing overflowing entries in an overflow area usually involves performing at least one additional random access seek.

A more integrated approach to collisions is to store the colliding entry in the hash table itself. In a classic approach, when a collision occurs, the second item's key is hashed using a second hash function and the resultant slot examined. If it is empty, the entry can be stored there. If it is not, a third hash function can be invoked and so on until an empty slot is found. If the entire table is full, then in some embodiments the table is split before the new entry is added. In general, a hash function H(K,X) can be defined where K is the key to be hashed and X is a positive integer which can be increased to find successive candidate locations in the hash table for a colliding entry. To search for a key K, slots H(K,X) are examined for X=1,2,... until a slot containing the key is found, or an empty slot is encountered (which indicates the end of the particular hash overflow chain within the table).

However, if the hash table is large and on disk, following a collision chain requires performing a series of random access seeks on the disk, which is extremely time consuming. This can be avoided by defining H(K,X) = H(K,X-1)+1; in other words, overflowing to the next adjacent slot 130 (Figure 13) (prior art) (wrapping around at the end of the table). This technique, called linear probing, keeps the accesses local. If, when reading the first slot accessed, the next S slots are read as well, for small S the disk operation takes no extra time (e.g. reading 1K instead of 12 bytes) and provides the overflow slots as well. Once the new entry is added, the slots can also be written back to disk as a group. The value S can be adjusted (possibly dynamically) so as to ensure that it is rare for a collision chain to span more than S slots (and thereby require an additional disk access).

### 6.6 Hash Table Buckets

An approach, related to reading more than one hash table entry at a time, is to divide the table into buckets 140 (**Figure 14**). For example, one could replace a table of 1024 slots with a table of 64 buckets each of which contains 16 slots. To search for an entry, a linear search can be performed within the bucket (or possibly a binary search if the keys within each bucket are sorted). Only occasionally does a bucket fill, in which case the overflow can move to the next bucket. So long as the table is not allowed to grow too full, overflow chains should not become too long. An advantage of index buckets is that they create units for disk access so that the number of random access disk seeks is reduced.

### 6.7 Hash Table Storage

Conceptually, each leaf of the tree "contains" a hash table regardless of where various parts of the tree may be stored. In practice, the leaf node in memory could contain the actual hash table or the location of the hash table on disk. In a typical embodiment in which the tree is stored in memory 80 and the hash table on disk 82, the leaf node 84 in memory would store a pointer to the position of the leaf's hash table 86 on disk 82 (**Figure 8**).

Storing the hash tables is simple if they are all the same size. Simply allocate a file or a portion of a disk and store the hash tables as an array in the file or portion of disk 88 (**Figure 8**). The hash tables in the array can be stored in any order.

In other embodiments in which all the hash tables are not the same size, the table could be stored using a heap structure on disk.

### 6.8 Hash Table Splitting

When a leaf 62 is split into a non-leaf 64 and two new leaves 66, 68, the contents of the leaf's hash table is divided between the two new leaves (**Figure 6**).

If leaf hash tables are all of the same size and are stored in an array on disk 150, the existing leaf's hash table can become the new left leaf's 152 hash table 154 and a single extra hash table 156 can be appended to the end of the hash table array 158. In the embodiment of **Figure 15****,** the leaf node that points to hash table B splits, becoming a new non-leaf node with two leaf node descendents. The space used to hold hash table B is used to hold the new left hash table B1 and a new hash table is created at the end of the array of hash tables to contain the new right leaf hash table B2.

One might at first think that, having re-used the original leaf as the new left leaf and having created a new right leaf, splitting the original leaf would be as simple as performing a single pass through its hash table and moving the elements whose next bit is a 1 to the right hash table. However, this approach suffers two difficulties. The first difficulty is overflow. If entries are removed from a table, the overflow chains in the table may be broken, rendering some entries inaccessible. The second difficulty is that if the entries have been hashed using the K bits following the top T bits used to get to the original leaf, then the first of those K bits should no longer be used because it is now used to traverse the final link of the tree to the new leaves.

For all these reasons, the simplest way to split a hash table 190 is to read it into memory 192, create two new fresh empty hash tables 194,196 in memory and perform a single pass through the original hash table and enter each entry into one or other of the two new hash tables. Then write 197 the two new tables 198,199 to disk 191 (**Figure 19**).

No matter how the splitting is performed, it is advantageous if the entries themselves contain enough of their keys to enable the splitting to occur without having to access another data structure, particularly one on disk.

### 6.9 Growing the Tree

When should a leaf be split? A number of heuristics can be used and each of these equates to a different concept of "fullness".

Perhaps the most obvious heuristic is to split the leaf when its hash table is completely full. While simple, this heuristic is likely to make using the table slow because, just prior to the split, the average overflow chain length of the slots will be about half the length of the table.

A leaf could be split when its hash table is more than a certain proportion full. For example, a leaf could be split when its hash table becomes more than 80% full (i.e. contains >= 0.8 S entries where S is the number of slots).

A leaf could be split when the longest overflow chain in the table reaches a predetermined length - for example 30 overflows. The predetermined length should be set high enough to yield acceptable densities but low enough to not to cause overflow chains so long that they are inefficient to traverse.

A leaf could be split when, in the course of adding entires to the leaf's table, an overflow chain of length greater than a predefined threshold is encountered. A leaf could be split with a predetermined probability P each time a new entry is added, or if the table becomes full. Setting P too low could waste too much space in the hash tables. Setting P too high could create overflow chains that may be inefficient to traverse.

### 6.10 Tree Growth Smoothing Techniques

Experience with the tree structure has shown that in embodiments where the keys are subblock hashes, the keys are usually so uniformly distributed that the leaves in the tree all tend to split at roughly the same time. This causes a temporary reduction in speed while the splitting occurs. These dips in performance occur at doubling intervals with the spread of the dip becoming wider with each iteration. Nevertheless, the dip can impact real-time performance, and so it is worth investigating means for ameliorating it.

One simple way to increase the time period over which each level splits (as distinguished to the time *when* it splits) is to assign a random threshold to each leaf when it is created. For example, each leaf could be allocated a uniformly distributed random density threshold between 60% and 90%. The leaf is then split when its hash table density exceeds the threshold. Because each leaf splits at its own density, the splitting of a level is diffused over a greater span of time. An alternative to the static scheme just described is for the threshold to be changed randomly each time the threshold is tested.

Another approach, which may make better use of space, is to use a constant splitting threshold (e.g. 80%), but to create different sized hash tables 160, 162, 164,166 in each leaf (**Figure 16**). This causes the leaves to split at different times. For example the random value can be set between X and Y, where X is not so low as to cause unnecessary splitting and Y so high as to cause a disruption to real time processing.

In some embodiments, it may be advantageous to choose for each table a random size selected from one of a small set of sizes (e.g. 1Kilobyte, 2K, 4K, 8K).

### 6.11 Replacing the Top of the Tree with an Array

As the hash values keys are very likely to be uniformly distributed, it is likely that the tree will grow in a very balanced manner. This means that, it is likely that entire levels (e.g. level 3) 90 of the tree will become full with non-leaf nodes. When this happens, the entire top of the tree (to (say) level L) can be replaced with a single array 92 (**Figure 9**), reducing the access time for that part of the tree from O(L) to O(1).

A variety of heuristics could be used for determining when to replace the top of the tree. A simple approach is to replace the top L levels of the tree only when level L consists entirely of non-leaf nodes. While simple, it is conceivable that this technique could break down as the tree grows because some nodes of lower levels might "hold out" for a while and not split. To cater for this, a heuristic could be employed that causes the top L levels of the tree to be replaced if the top L levels contain more than X% of non-leaf nodes (where X is a predefined threshold, (e.g. 80%), which is not so low as to waste space but not so high as to be too stringent a requirement to invoke the optimisation). One way to implement this is to place a field 170 in each node being the node's depth. Then, a pointer 172 to a single leaf node could be placed in multiple slots in the same array. If the leaf fills and splits, pointers to the resulting two leaves could fill the positions in the array occupied by the original leaf (**Figure 17**).

As a theoretical aside, it is possible that the complexity of O(1) is achieved for a data structure that uses hashes as keys and has an array at the top of the tree and hash tables in the leaves. The array at the top is clearly O(1). The hash table in the leaf is also clearly O(1). This leaves only the layers of non-leaf nodes between the array and the leaves to introduce any complexity of an order higher than O(1). If the hashes are uniformly distributed, then it seems likely that a proof could be constructed showing that the average number of levels between the array and the leaves is O(1) which would mean that the entire data structure has an O(1) access time.

Of possible theoretical (and possibly practical) concern is the hash table splitting operation which involves moving every existing element in a leaf's hash table to one of two different descendent node hash tables. Could the doubling cause the growing data structure to cost more than O(1) per update? The answer is no, because, viewed from the perspective of an individual entry, the splitting operation occurs at time intervals that double. The total splitting cost per entry for hash tables of length N that are filled before being split is therefore 1/N + 1/2N + 1/4N + 1/8N... which adds up to 1 which is O(1).

### 6.12 Other Data Structures

An alternative approach to maintaining a tree of hash tables is to replace the tree with a single master hash table. This could be achieved by creating a hash entry in the master table for each of the nodes that would otherwise be stored in a binary search tree.

### 6.13 Complexity Attacks

A complexity attack occurs on a system when the attacker feeds data into the system that is designed to drive one of the system's data structures into its worst case state. For example, if an attacker knows that a web server employs a non-balanced binary tree, he could feed sorted data into the tree to cause the tree to become a list. This might yield such bad subsequent search times that the server grinds to a halt.

The present invention does not appear to be vulnerable to complexity attacks (for embodiments where the cryptographic hashes are used as keys) in the long run because, as the tree deepens, it will become more and more computationally expensive for an attacker to find subblocks that hash to a particular leaf. However, until that scale is reached, each individual hash table is vulnerable to a complexity attack if the attacker feeds in subblocks that hit the same slot repeatedly. This would cause a very long overflow chain to form within the table which could slow down subsequent searches within that table.

The soundest way to avoid a complexity attack is to design a data structure that has a good worst case. Although this is possible with some balanced tree structures, this is not easy to do with a hash table because, no matter how chaotic the hash function is, it is possible for an all-knowing attacker to form the next key in such a way that it will land on the hash table's longest chain. If we accept that the probability of the hash table's worst (or near worst) case arising at random is negligible (so long as the table is not approaching its maximum density), then one way to defend against a complexity attack in a hash table is to generate a secret random seed when the hash table is created and hash the subblock hash with the seed to yield the hash table slot (**Figure 20**). So long as the attacker does not know the seed, a complexity attack will be practically impossible.

### 6.14 A Note on Scope

It will be appreciated by those skilled in the art that the invention is not restricted in its use to the particular application described. Neither is the present invention restricted in its preferred embodiment with regard to the particular elements and/or features described or depicted herein. It will be appreciated that various modifications can be made without departing from the principles of the invention. Therefore, the invention should be understood to include all such modifications within its scope, as defined by the appended claims.

## Claims

1. A method for indexing data for the purpose of storing, communicating or comparing data, by indexing one or more blocks of data, the method comprising:
creating an index comprising a digital search tree whose non-leaf nodes index prefixes of keys derived from the blocks,
where a leaf node of the tree comprises a hash table configured to store index values for the remaining suffixes of the keys that have a common prefixes indexed by the leaf node, and
where an index value comprises the location of a block.

2. The method of claim 1, where the digital search tree is a binary digital search tree.

3. The method of claim 2, where the digits of the digital search tree correspond to the successive bits of the key.

4. The method of claim 1, where a hash table comprises buckets.

5. The method of claim 1, where the keys are hashes of blocks.

6. The method of claim 5, where part of the hash of the block is used to index the hash table.

7. The method of claim 1, where the hash tables associated with the leaves are stored in an array.

8. The method of claim 7, where the array is in memory.

9. The method of claim 1, where the top L levels of a subtree of the tree are replaced by an array.

10. The method of claim 9, where the top L levels of the tree are replaced by an array.

11. The method of claim 9, where the tree is a binary digital search tree and the replacement array has 2^{L} elements.

12. The method of claim 9, where the replacement is performed when the L levels of the subtree satisfy a predetermined criterion.

13. The method of claim 12, where the predetermined criterion is that the top L levels of the subtree consists of non-leaf nodes.

14. The method of claim 12, where the predetermined criterion is that the top L levels of the subtree contain at least T percent non-leaf nodes where T is a predetermined threshold.

15. The method of claim 1, where the digital search tree is expanded by replacing a leaf node with a non-leaf node having a plurality of new leaf nodes attached, where the contents of the hash table in the old leaf node is distributed among the hash tables of the new leaf nodes.

16. The method of claim 15, where expansion occurs when the fullness of a hash table exceeds a predetermined threshold.

17. The method of claim 15, where the hash table has a fullness splitting threshold.

18. The method of claim 17, where the threshold for the hash table has a random component.

19. The method of claim 15, where each new leaf is created with a hash table of varying size.

20. The method of claim 19 where the size of the hash table is chosen between a predefined minimum and a predefined maximum.

21. The method of claim 20, where the size of the hash table is chosen randomly between a predefined minimum and a predefined maximum.

22. The method of claim 19, where the determination of the size has a random component.

23. The method of claim 15, where a hash table is split by reading the hash table into memory, splitting the hash table into two hash tables, and writing the two hash tables to disk.

24. The method of claim 15, where storage space consumed by the table of the original leaf is reallocated to be the table of one of the descendent leaves.

25. The method of claim 15, where the hash table uses overflow chains, and where the hash table is split when the longest overflow chain reaches a predetermined threshold.

26. The method of claim 15, where the hash table uses overflow chains, and where the hash table is split when an overflow chain greater than a predetermined length is traversed.

27. The method of claim 15, where the hash table is split when it becomes full or with a predetermined probability P whenever a key /value pair is added to the hash table.

28. The method of claim 1, where the hash tables in the leaves are held on disk.

29. The method of claim 1, where the keys are first hashed using a secret key configured to prevent a complexity attack on the data structure.

## Patentansprüche

1. Verfahren zum Indexieren von Daten für den Zweck des Speicherns, Kommunizierens oder Vergleichens von Daten, durch Indexieren eines Datenblocks oder mehrerer Datenblöcke, wobei das Verfahren umfasst:
Herstellen eines Index, der einen digitalen Suchbaum umfasst, dessen Nicht-Blattknoten Präfixe von Schlüsseln indexieren, die von den Blöcken abgeleitet werden,
wobei ein Blattknoten des Baumes eine Hashtabelle umfasst, die dazu ausgestaltet ist, Indexwerte für die verbleibenden Suffixe der Schlüssel zu speichern, die gemeinsame Präfixe haben, die durch den Blattknoten indexiert werden, und
wobei ein Indexwert den Platz eines Blocks umfasst.

2. Verfahren nach Anspruch 1, wobei der digitale Suchbaum ein binärer digitaler Suchbaum ist.

3. Verfahren nach Anspruch 2, wobei die Ziffern des digitalen Suchbaums den aufeinanderfolgenden Bits des Schlüssels entsprechen.

4. Verfahren nach Anspruch 1, wobei eine Hashtabelle Buckets umfasst.

5. Verfahren nach Anspruch 1, wobei die Schlüssel Hashes von Blöcken sind.

6. Verfahren nach Anspruch 5, wobei ein Teil des Hashes des Blocks dazu verwendet wird, die Hashtabelle zu indexieren.

7. Verfahren nach Anspruch 1, wobei die Hashtabellen den Blättern zugeordnet sind, die in einer Anordnung gespeichert sind.

8. Verfahren nach Anspruch 7, wobei sich die Anordnung in einem Speicher befindet.

9. Verfahren nach Anspruch 1, wobei die oberen L-Ebenen eines Teilbaums des Baums durch eine Anordnung ersetzt werden.

10. Verfahren nach Anspruch 9, wobei die oberen L-Ebenen des Baums durch eine Anordnung ersetzt werden.

11. Verfahren nach Anspruch 9, wobei der Baum ein binärer digitaler Suchbaum ist, und die Ersatzanordnung 2^{L} Elemente aufweist.

12. Verfahren nach Anspruch 9, wobei das Ersetzen durchgeführt wird, wenn die L-Ebenen des Teilbaums ein zuvor bestimmtes Kriterium erfüllen.

13. Verfahren nach Anspruch 12, wobei das zuvor bestimmte Kriterium daraus besteht, dass die oberen L-Ebenen des Teilbaums aus Nicht-Blattknoten bestehen.

14. Verfahren nach Anspruch 12, wobei das zuvor bestimmte Kriterium daraus besteht, dass die oberen L-Ebenen des Teilbaums mindestens T-Prozent Nicht-Blattknoten enthalten, wobei T ein zuvor bestimmter Schwellenwert ist.

15. Verfahren nach Anspruch 1, wobei der digitale Suchbaum durch Ersetzen eines Blattknotens durch einen Nicht-Blattknoten mit einer Vielzahl von daran befestigten neuen Blattknoten erweitert wird, wobei die Inhalte der Hashtabelle in dem alten Blattknoten auf die Hashtabellen der neuen Blattknoten verteilt werden.

16. Verfahren nach Anspruch 15, wobei die Erweiterung stattfindet, wenn die Füllung der Hashtabelle einen zuvor bestimmten Schwellenwert übersteigt.

17. Verfahren nach Anspruch 15, wobei die Hashtabelle einen die Füllung aufteilenden Schwellenwert aufweist.

18. Verfahren nach Anspruch 17, wobei der Schwellenwert für die Hashtabelle eine Zufälligkeitskomponente aufweist.

19. Verfahren nach Anspruch 15, wobei jedes neue Blatt mit einer Hashtabelle variierender Größe hergestellt wird.

20. Verfahren nach Anspruch 19, wobei die Größe der Hashtabelle zwischen einem zuvor definierten Minimum und einem zuvor definierten Maximum gewählt wird.

21. Verfahren nach Anspruch 20, wobei die Größe der Hashtabelle zwischen einem zuvor definierten Minimum und einem zuvor definierten Maximum zufällig gewählt wird.

22. Verfahren nach Anspruch 19, wobei die Bestimmung der Größe eine Zufälligkeitskomponente aufweist.

23. Verfahren nach Anspruch 15, wobei eine Hashtabelle durch Einlesen der Hashtabelle in den Speicher, Aufteilen der Hashtabelle in zwei Hashtabellen und Schreiben der beiden Hashtabellen auf eine Platte aufgeteilt wird.

24. Verfahren nach Anspruch 15, wobei der Speicherplatz, der durch die Tabelle des ursprünglichen Blatts eingenommen wird, als die Tabelle von einem der absteigenden Blätter wieder zugeordnet wird.

25. Verfahren nach Anspruch 15, wobei die Hashtabelle Überlaufketten verwendet, und wobei die Hashtabelle aufgeteilt wird, wenn die längste Überlaufkette einen zuvor bestimmten Schwellenwert erreicht.

26. Verfahren nach Anspruch 15, wobei die Hashtabelle Überlaufketten verwendet, und wobei die Hashtabelle aufgeteilt wird, wenn eine Überlaufkette, die länger als eine zuvor bestimmte Länge ist, durchlaufen wird.

27. Verfahren nach Anspruch 15, wobei die Hashtabelle aufgeteilt wird, wenn sie voll wird, oder mit einer zuvor bestimmten Wahrscheinlichkeit P, wann immer ein Schlüssel/Wertepaar der Hashtabelle hinzugefügt wird.

28. Verfahren nach Anspruch 1, wobei die Hashtabellen in den Blättern auf einer Platte gehalten werden.

29. Verfahren nach Anspruch 1, wobei die Schlüssel zuerst unter Verwendung eines geheimen Schlüssel zerkleinert werden, der dazu ausgestaltet ist, eine Komplexitätsangriff auf die Datenstruktur zu verhindern.

## Revendications

1. Procédé pour indexer dans le but de stocker, communiquer ou comparer des données, en indexant un ou plusieurs blocs de données, le procédé comprenant les étapes consistant à :
créer un index comprenant un arbre de recherche digitale dont les noeuds non-feuilles indexent des préfixes de clés déduits des blocs,
où un noeud feuille de l'arbre comprend une table de hachage configurée pour stocker des valeurs d'index pour les suffixes restants des clés qui ont un préfixe commun indexé par le noeud feuille, et
où une valeur d'index comprend l'emplacement d'un bloc.

2. Procédé selon la revendication 1, dans lequel l'arbre de recherche digital est un arbre de recherche digital binaire.

3. Procédé selon la revendication 2, dans lequel les chiffres de l'arbre de recherche digital correspondent aux bits successifs de la clé.

4. Procédé selon la revendication 1, dans lequel une table de hachage comprend des seaux.

5. Procédé selon la revendication 1, dans lequel les clés sont des hachages de blocs.

6. Procédé selon la revendication 5, dans lequel une partie du hachage du bloc est utilisée pour indexer la table de hachage.

7. Procédé selon la revendication 1, dans lequel les tables de hachage associées aux feuilles sont stockées dans un réseau.

8. Procédé selon la revendication 7, dans lequel le réseau se trouve dans une mémoire.

9. Procédé de la revendication 1, dans lequel les niveaux L supérieurs d'un sous-arbre de l'arbre sont remplacés par un réseau.

10. Procédé de la revendication 9, dans lequel les niveaux L supérieurs de l'arbre sont remplacés par un réseau.

11. Procédé selon la revendication 9, dans lequel l'arbre est un arbre de recherche digital binaire, et le réseau de remplacement comprend 2^{L} éléments.

12. Procédé selon la revendication 9, dans lequel le remplacement est effectué lorsque les niveaux L du sous-arbre satisfont un critère prédéterminé.

13. Procédé selon la revendication 12, dans lequel le critère prédéterminé est que les niveaux L supérieurs du sous-arbre sont constitués de noeuds non-feuilles.

14. Procédé selon la revendication 12, dans lequel le critère prédéterminé est que les niveaux L supérieurs du sous-arbre contiennent au moins T pourcents de noeuds non-feuilles, T étant un seuil prédéterminé.

15. Procédé selon la revendication 1, dans lequel l'arbre de recherche digital est développé par le remplacement d'un noeud feuille par un noeud non-feuilles ayant une pluralité de nouveaux noeuds feuille attachés, dans lequel le contenu de la table de hachage dans l'ancien noeud feuille est distribué parmi les tables de hachage des nouveaux noeuds feuilles.

16. Procédé selon la revendication 15, dans lequel le développement se produit lorsque la totalité d'une table de hachage dépasse un seuil prédéterminé.

17. Procédé selon la revendication 15, dans lequel la table de hachage a un seuil de division de totalité.

18. Procédé selon la revendication 17, dans lequel le seuil de la table de hachage a une composante aléatoire.

19. Procédé selon la revendication 15, dans lequel chaque nouvelle feuille est créée avec une table de hachage de taille variable.

20. Procédé selon la revendication 19, dans lequel la taille de la table de hachage est choisie entre un minimum prédéfini et un maximum prédéfini.

21. Procédé selon la revendication 20, dans lequel la taille de la table de hachage est choisie de manière aléatoire entre un minimum prédéfini et un maximum prédéfini.

22. Procédé selon la revendication 19, dans lequel la détermination de la taille a une composante aléatoire.

23. Procédé selon la revendication 15, dans lequel une table de hachage est divisée en lisant la table de hachage dans une mémoire, en divisant la table de hachage en deux tables de hachage, et en écrivant les deux tables de hachage sur un disque.

24. Procédé selon la revendication 15, dans lequel l'espace de stockage consommé par la table de la feuille d'origine est réaffecté pour être la table de l'une des feuilles descendantes.

25. Procédé selon la revendication 15, dans lequel la table de hachage utilise les chaînes de débordement, et dans lequel la table de hachage est divisée lorsque la chaîne de débordement la plus longue atteint un seuil prédéterminé.

26. Procédé selon la revendication 15, dans lequel la table de hachage utilise des chaînes de débordement, et dans lequel la table de hachage est divisée quand une chaîne de débordement supérieure à une longueur prédéterminée est traversée.

27. Procédé selon la revendication 15, dans lequel la table de hachage est divisée quand elle devient pleine ou avec une probabilité prédéterminée P à chaque fois qu'une paire valeur/clé est ajoutée à la table de hachage.

28. Procédé selon la revendication 1, dans lequel les tables de hachage dans les feuilles sont supportées sur un disque.

29. Procédé selon la revendication 1, dans lequel les clés sont premièrement hachées en utilisant une clé secrète configurée de manière à empêcher une attaque de complexité sur la structure de données.
